# EUROPEAN PATENT APPLICATION

(11) **EP 4 806 934 A1**
(43) Date of publication of application: **16.09.2026**
(21) Application number: 24888710.1
(22) Date of filing: 05.11.2024
(51) Int. Cl.: C08G 61/08

(54) **CYCLIC OLEFIN RING-OPENED POLYMER, CYCLIC OLEFIN RING-OPENED POLYMER HYDRIDE, RESIN COMPOSITION, AND RESIN MOLDED BODY**

(30) Priority: 09.11.2023 JP 2023191851
(71) Applicant: Zeon Corporation, Tokyo 100-8246 (JP)
(72) Inventor: YAMADA, Satoshi, Tokyo 100-8246 (JP); HOJO, Tomohiro, Tokyo 100-8246 (JP)
(74) Representative: Maiwald GmbH
(86) International application number: PCT/JP2024/039328
(87) International publication number: WO 2025/100415

(57) **Abstract**

Provided are a hydrogenated cycloolefin ring-opened polymer having both a moderately sized Abbe number and low birefringence and a raw material thereof. A cycloolefin ring-opened polymer includes a structural unit (A) derived from deltacyclene and a structural unit (B) derived from a cycloolefin monomer having an aromatic ring structure. A hydrogenated cycloolefin ring-opened polymer is obtained through hydrogenation of this cycloolefin ring-opened polymer.

## Description

### TECHNICAL FIELD

The present disclosure relates to a cycloolefin ring-opened polymer, a hydrogenated cycloolefin ring-opened polymer, a resin composition, and a resin shaped product.

### BACKGROUND

Hydrogenated cycloolefin ring-opened polymers that are obtained through hydrogenation of cycloolefin ring-opened polymers obtained by ring-opening polymerization of cycloolefin monomers are widely used as shaping materials for optical elements such as optical lenses due to excelling in terms of transparency, low hygroscopicity, heat resistance, electrical insulation, chemical resistance, and so forth. In recent years, various proposals have been made with the aim of improving physical properties of hydrogenated cycloolefin ring-opened polymers.

As one example, Patent Literature (PTL) 1 discloses a copolymer that is a copolymer obtained through copolymerization of one or more cycloolefin monomers and one or more chain olefin monomers or a copolymer obtained through copolymerization of two or more cycloolefin monomers and that has a glass-transition temperature of 100°C or higher, a refractive index of 1.545 or more, and an Abbe number of 50 or more, and also discloses a hydrogenated product of this copolymer, a shaping material containing this copolymer or hydrogenated copolymer, and a resin shaped product obtained through shaping of this shaping material.

### CITATION LIST

### Patent Literature

PTL 1: WO2016/163371A1

### SUMMARY

### (Technical Problem)

Improvement of the performance of optical elements such as optical lenses in recent years has been accompanied by even greater demand for reduction of birefringence of hydrogenated cycloolefin ring-opened polymers that are used as shaping materials for producing optical elements. In recent years, there has also been demand for the development of not only hydrogenated cycloolefin ring-opened polymers having a high Abbe number (for example, 50 or more) as shaping materials for optical elements, but also hydrogenated cycloolefin ring-opened polymers having a moderately sized Abbe number of a low to mid-level (for example, not less than 35 and less than 50) from viewpoints such as increasing freedom of optical design.

However, the hydrogenated cycloolefin ring-opened polymer of the conventional technique described above does not simultaneously have both a moderately sized Abbe number and low birefringence.

Accordingly, one object of the present disclosure is to provide a hydrogenated cycloolefin ring-opened polymer having both a moderately sized Abbe number and low birefringence and a raw material thereof.

Another object of the present disclosure is to provide a resin composition that can advantageously be used as a material of various shaped products such as optical elements and a resin shaped product formed using this resin composition.

### (Solution to Problem)

The inventors made diligent studies with the aim of solving the problem described above. The inventors made a new discovery that a hydrogenated cycloolefin ring-opened polymer obtained through hydrogenation of a cycloolefin ring-opened polymer that includes a structural unit derived from deltacyclene and a structural unit derived from a cycloolefin monomer having an aromatic ring structure can simultaneously achieve both a moderately sized Abbe number and reduction of birefringence, and, in this manner, completed the present disclosure.

Specifically, with the aim of advantageously solving the problem set forth above, [1] a presently disclosed cycloolefin ring-opened polymer comprises: a structural unit (A) derived from deltacyclene; and a structural unit (B) derived from a cycloolefin monomer having an aromatic ring structure. A cycloolefin ring-opened polymer that includes a structural unit (A) derived from deltacyclene and a structural unit (B) derived from a cycloolefin monomer having an aromatic ring structure can advantageously be used as a raw material of a hydrogenated cycloolefin ring-opened polymer that can simultaneously achieve both a moderately sized Abbe number (for example, not less than 35 and less than 50) and reduction of birefringence.

[2] In the cycloolefin ring-opened polymer according to the foregoing [1], the structural unit (B) is preferably a structural unit derived from a monomer represented by formula (1), shown below: 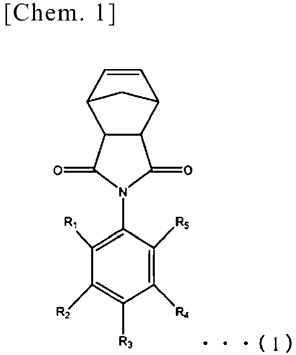 where, in formula (1), R₁ to R₅ each independently represent a hydrogen atom, a halogen atom, a hydroxy group, a cyano group, a nitro group, an optionally substituted alkyl group, an optionally substituted cycloalkyl group, an optionally substituted alkenyl group, an optionally substituted alkynyl group, an optionally substituted alkoxy group, an optionally substituted aromatic hydrocarbon ring group, or an optionally substituted aromatic heteroring group, and two or more of R₁ to R₅ may be bonded to form a ring.

When the structural unit (B) is a structural unit derived from the specific monomer set forth above, the Abbe number of an obtained hydrogenated cycloolefin ring-opened polymer can be set as a moderate size while also even further reducing birefringence.

Moreover, with the aim of advantageously solving the problem set forth above, [3] a presently disclosed hydrogenated cycloolefin ring-opened polymer is obtained through hydrogenation of the cycloolefin ring-opened polymer according to the foregoing [1] or [2]. A hydrogenated cycloolefin ring-opened polymer that is obtained through hydrogenation of the cycloolefin ring-opened polymer set forth above has both a moderately sized Abbe number and low birefringence.

[4] In the hydrogenated cycloolefin ring-opened polymer according to the foregoing [3], aromatic carbon-carbon unsaturated bonds present in the hydrogenated cycloolefin ring-opened polymer are preferably not hydrogenated. When aromatic carbon-carbon unsaturated bonds present in the hydrogenated cycloolefin ring-opened polymer are not hydrogenated, the Abbe number can be set as a moderate size while also even further reducing birefringence.

[5] The hydrogenated cycloolefin ring-opened polymer according to the foregoing [3] or [4] preferably has an Abbe number of less than 50. When the Abbe number is less than 50, the hydrogenated cycloolefin ring-opened polymer can suitably be used in applications other than high-Abbe number optical element applications.

Note that the "Abbe number" referred to in the present disclosure can be measured by a method described in the EXAMPLES section.

[6] The hydrogenated cycloolefin ring-opened polymer according to any one of the foregoing [3] to [5] preferably has a glass-transition temperature of 120°C or higher. When the glass-transition temperature is 120°C or higher, deterioration of optical properties due to thermal deformation or the like of a resin shaped product that has been formed using the hydrogenated cycloolefin ring-opened polymer can be inhibited.

Note that the "glass-transition temperature" referred to in the present disclosure can be measured by a method described in the EXAMPLES section.

Furthermore, with the aim of advantageously solving the problem set forth above, [7] a presently disclosed resin composition comprises the hydrogenated cycloolefin ring-opened polymer according to any one of the foregoing [3] to [6]. A resin composition that contains any one of the hydrogenated cycloolefin ring-opened polymers set forth above can advantageously be used as a material of various shaped products such as optical elements.

Also, with the aim of advantageously solving the problem set forth above, [8] a presently disclosed resin shaped product is obtained through shaping of the resin composition according to the foregoing [7]. A resin shaped product that has been formed using the resin composition set forth above can display excellent performance.

### (Advantageous Effect)

According to the present disclosure, it is possible to provide a hydrogenated cycloolefin ring-opened polymer having both a moderately sized Abbe number and low birefringence and a raw material thereof.

Moreover, according to the present disclosure, it is possible to provide a resin composition that can advantageously be used as a material of various shaped products such as optical elements and a resin shaped product formed using this resin composition.

### DETAILED DESCRIPTION

The following provides a detailed description of embodiments of the present disclosure.

The presently disclosed cycloolefin ring-opened polymer can suitably be used as a raw material of the presently disclosed hydrogenated cycloolefin ring-opened polymer, for example. The presently disclosed hydrogenated cycloolefin ring-opened polymer has a moderately sized Abbe number and low birefringence and can suitably be used as a material of various shaped products such as optical elements. The presently disclosed resin composition can suitably be used as a material for producing the presently disclosed resin shaped product, for example. The presently disclosed resin shaped product can suitably be used as an optical element such as an optical film, a lens of an imaging device such as a camera, or a lens of a mobile terminal such as a mobile telephone or a smartphone, for example.

### (Cycloolefin ring-opened polymer)

The presently disclosed cycloolefin ring-opened polymer can be obtained by performing ring-opening polymerization of a monomer composition containing specific cycloolefin compounds (monomers) in the presence of a polymerization catalyst, for example.

Moreover, the presently disclosed cycloolefin ring-opened polymer includes a structural unit (A) derived from deltacyclene and a structural unit (B) derived from a cycloolefin monomer having an aromatic ring structure, and optionally further includes other structural units. Each structural unit is described below.

### <Structural unit (A) derived from deltacyclene>

The structural unit (A) derived from deltacyclene (hereinafter, also abbreviated as the "structural unit (A)") is a structural unit that is derived from deltacyclene represented by the following formula (2).

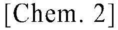

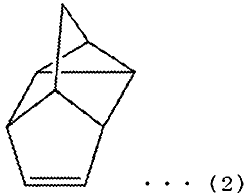

### [Proportional content]

The proportional content of the structural unit (A) when the proportional content of all repeating units included in the cycloolefin ring-opened polymer are taken to be 100 mass% is preferably 10 mass% or more, more preferably 15 mass% or more, and even more preferably 20 mass% or more, and is preferably 90 mass% or less, more preferably 75 mass% or less, even more preferably 60 mass% or less, and particularly preferably 50 mass% or less. When the proportional content of the structural unit (A) is not more than any of the upper limits set forth above, sedimentation of the cycloolefin ring-opened polymer after synthesis of the cycloolefin ring-opened polymer can be inhibited. Moreover, when the proportional content of the structural unit (A) is not less than any of the lower limits set forth above, the glass-transition temperature of an obtained hydrogenated cycloolefin ring-opened polymer can be restricted from becoming excessively high.

Note that the "proportional content of a structural unit" referred to in the present disclosure can be measured by a nuclear magnetic resonance (NMR) method such as ¹H-NMR or ¹³C-NMR.

### <Structural unit (B) derived from cycloolefin monomer having aromatic ring structure>

Examples of cycloolefin monomers having an aromatic ring structure that can form the structural unit (B) derived from a cycloolefin monomer having an aromatic ring structure (hereinafter, also abbreviated as the "structural unit (B)") include norbornene compounds having an aromatic ring structure and non-norbornene compounds having an aromatic ring structure without any specific limitations. Although these compounds may be used in combination, the cycloolefin monomer having an aromatic ring structure that can form the structural unit (B) is preferably a norbornene compound having an aromatic ring structure from a viewpoint of imparting a moderately sized Abbe number to an obtained hydrogenated cycloolefin ring-opened polymer while also further reducing birefringence.

The aromatic ring structure may be an aromatic hydrocarbon ring or an aromatic heteroring without any specific limitations.

The aromatic hydrocarbon ring may be an aromatic hydrocarbon ring having a carbon number of 6 to 30 such as a benzene ring, a naphthalene ring, or an anthracene ring without any specific limitations. Of these aromatic hydrocarbon rings, a benzene ring is preferable.

The aromatic heteroring may be an aromatic heteroring having a carbon number of 2 to 30 such as a furan ring, a benzofuran ring, a pyrrole ring, an indole ring, a thiophene ring, a benzothiophene ring, a pyridine ring, a pyrazine ring, a pyrimidine ring, a triazole ring, a triazine ring, a pyrroline ring, an imidazole ring, a pyrazole ring, a thiazole ring, a benzothiazole ring, a thienothiazole ring, an oxazole ring, or a benzoxazole ring without any specific limitations.

The aromatic ring structure may be a monocyclic structure or may be a polycyclic structure resulting from condensation of at least one type of ring selected from the group consisting of the aromatic hydrocarbon rings and aromatic heterorings described above.

Moreover, the aromatic ring structure may have a substituent. Specific examples of substituents include halogen atoms such as a chlorine atom, a fluorine atom, a bromine atom, and an iodine atom; a cyano group; a nitro group; unsubstituted alkyl groups having a carbon number of not less than 1 and not more than 10 such as a methyl group, an ethyl group, and a propyl group; unsubstituted alkenyl groups having a carbon number of not less than 2 and not more than 6 such as a vinyl group and an allyl group; alkyl groups having a carbon number of not less than 1 and not more than 10 in which at least one hydrogen atom has been replaced by a halogen atom (for example, a fluorine atom) such as a trifluoromethyl group; and alkoxy groups having a carbon number of not less than 1 and not more than 10 such as a methoxy group, an ethoxy group, and an isopropoxy group.

The number of substituents may be one or may be more than one. In a case in which a plurality of substituents are included, these substituents may be the same as or different from one another.

In particular, the aromatic ring structure is preferably an aromatic hydrocarbon ring from a viewpoint of imparting a moderately sized Abbe number to an obtained hydrogenated cycloolefin ring-opened polymer while also even further reducing birefringence.

### [Norbornene compound having aromatic ring structure]

The norbornene compound having an aromatic ring structure may be a compound that has at least one aromatic ring structure and at least one norbornene ring in a molecule. Note that the aromatic ring structure and the norbornene ring may be present separately from each other or may form a condensed ring.

Examples of the norbornene compound having an aromatic ring structure include phenylnorbornene such as 5-phenyl-2-norbornene, 5-methyl-5-phenyl-bicyclo[2.2.1]hept-2-ene, 5-benzyl-bicyclo[2.2.1]hept-2-ene, 5-tolyl-bicyclo[2.2.1]hept-2-ene (i.e., 5-(4-methylphenyl)-2-norbornene), 5-(ethylphenyl)-bicyclo[2.2.1]hept-2-ene, 5-(isopropylphenyl)-bicyclo[2.2.1]hept-2-ene, 5-methyl-5-carboxybenzylbicyclo[2.2.1]hept-2-ene, 8-phenyl-tetracyclo[4.4.0.1^{2,5}.1^{7,10}]-3-dodecene, 8-methyl-8-phenyl-tetracyclo[4.4.0.1^{2,5}.1^{7,10}]-3-dodecene, 8-benzyl-tetracyclo[4.4.0.1^{2,5}.1^{7,10}]-3-dodecene, 8-tolyl-tetracyclo[4.4.0.1^{2,5}.1^{7,10}]-3-dodecene, 8-(ethylphenyl)-tetracyclo[4.4.0.1^{2,5}.1^{7,10}]-3-dodecene, 8-(isopropylphenyl)-tetracyclo[4.4.0.1^{2,5}.1^{7,10}]-3-dodecene, 8,9-diphenyl-tetracyclo[4.4.0.1^{2,5}.1^{7,10}]-3-dodecene, 8-(biphenyl)-tetracyclo[4.4.0.1^{2,5}.1^{7,10}]-3-dodecene, 8-(β-naphthyl)-tetracyclo[4.4.0.1^{2,5}.1^{7,10}]-3-dodecene, 8-(β-naphthyl)-tetracyclo[4.4.0.1^{2,5}.1^{7,10}]-3-dodecene, 8-(anthracenyl)-tetracyclo[4.4.0.1^{2,5}.1^{7,10}]-3-dodecene, 11-phenyl-hexacyclo[6.6.1.1^{3,6}.1^{10,13}.0^{2,7}.0^{9,14}]-4-heptadecene, 6-(α-naphthyl)-bicyclo[2.2.1]hept-2-ene, 5-(anthracenyl)-bicyclo[2.2.1]hept-2-ene, 5-(biphenyl)-bicyclo[2.2.1]hept-2-ene, 5-(β-naphthyl)-bicyclo[2.2.1]hept-2-ene, 5,6-diphenyl-bicyclo[2.2.1]hept-2-ene, 9-(2-norbornene-5-yl)-carbazole, 1,4-methano-1,4,4a,4b,5,8,8a,9a-octahydrofluorene, 1,4-methano-1,4,4a,9a-tetrahydrofluorene, 1,4-methano-8-methyl-1,4,4a,9a-tetrahydrofluorene, 1,4-methano-8-chloro-1,4,4a,9a-tetrahydrofluorene, 1,4-methano-8-bromo-1,4,4a,9a-tetrahydrofluorene, 1,4-methano-1,4,4a,9a-tetrahydrodibenzofuran, 1,4-methano-1,4,4a,9a-tetrahydrocarbazole, 1,4-methano-9-phenyl-1,4,4a,9a-tetrahydrocarbazole, 1,4-methano-1,4,4a,5,10,10a-hexahydroanthracene, 7,10-methano-6b,7,10,10a-tetrahydrofluoranthrene, a cyclopentadiene-acenaphthylene adduct, a compound obtained through further addition of cyclopentadiene to a cyclopentadiene-acenaphthylene adduct, 11,12-benzo-pentacyclo[6.5.1.1^{3,6}.0^{2,7}.0^{9,13}]-4-pentadecene, 11,12-benzo-pentacyclo[6.6.1.1^{3,6}.0^{2,7}.0^{9,14}]-4-hexadecene, 14,15-benzo-heptacyclo[8.7.0.1^{2,9}.1^{4.7}1^{11,17}.0^{3,8}.0^{12,16}]-5-eicosene, 5,5A,6,9,9A,10,10A,11-octahydro-4bh-5,10,6,9-dimethano-benzo[B]fluorene, derivatives of any of the preceding examples, and compounds represented by the following formula (1). Note that the term "derivative" refers to a compound having a substituent in the ring structure. Examples of substituents that can be included in the ring structure include, but are not specifically limited to, an alkyl group, an alkylene group, a vinyl group, an alkoxycarbonyl group, and an alkylidene group. Moreover, the ring structure of a derivative may include one of these types of substituents or may include two or more of these types of substituents. 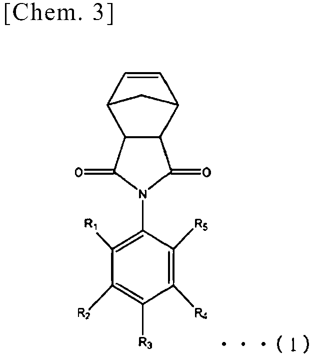 (In formula (1), R₁ to R₅ each independently represent a hydrogen atom, a halogen atom, a hydroxy group, a cyano group, a nitro group, an optionally substituted alkyl group, an optionally substituted cycloalkyl group, an optionally substituted alkenyl group, an optionally substituted alkynyl group, an optionally substituted alkoxy group, an optionally substituted aromatic hydrocarbon ring group, or an optionally substituted aromatic heteroring group, and two or more of R₁ to R₅ may be bonded to form a ring.)

The halogen atom that can constitute R₁ to R₅ may be a chlorine atom, a fluorine atom, a bromine atom, an iodine atom, or the like without any specific limitations.

The optionally substituted alkyl group that can constitute R₁ to R₅ may be an optionally substituted alkyl group having a carbon number of not less than 1 and not more than 10 without any specific limitations. The alkyl group having a carbon number of not less than 1 and not more than 10 in the "optionally substituted alkyl group having a carbon number of not less than 1 and not more than 10" may be linear or branched and may be an alkyl group such as a methyl group, an ethyl group, an n-propyl group, an isopropyl group, an n-butyl group, an isobutyl group, a tert-butyl group, an n-pentyl group, a neopentyl group, a hexyl group, an octyl group, a nonyl group, or a decyl group, for example. Of these alkyl groups, a methyl group is preferable.

Specific examples of substituents of the "optionally substituted alkyl group having a carbon number of not less than 1 and not more than 10" are the same as for substituents that can be included in the previously described aromatic ring structure. The number of substituents may be one or may be more than one. In a case in which a plurality of substituents are included, these substituents may be the same as or different from one another.

The optionally substituted cycloalkyl group that can constitute R₁ to R₅ may be an optionally substituted cycloalkyl group having a carbon number of not less than 3 and not more than 12 without any specific limitations. The cycloalkyl group having a carbon number of not less than 3 and not more than 12 in the "optionally substituted cycloalkyl group having a carbon number of not less than 3 and not more than 12" may be a cyclopropyl group, a cyclobutyl group, a cyclopentyl group, a cyclohexyl group, a cyclooctyl group, or the like, for example.

Specific examples of substituents of the "optionally substituted cycloalkyl group having a carbon number of not less than 3 and not more than 12" are the same as for substituents that can be included in the previously described aromatic ring structure. The number of substituents may be one or may be more than one. In a case in which a plurality of substituents are included, these substituents may be the same as or different from one another.

The optionally substituted alkenyl group that can constitute R₁ to R₅ may be an optionally substituted alkenyl group having a carbon number of not less than 2 and not more than 10 without any specific limitations. The alkenyl group having a carbon number of not less than 2 and not more than 10 in the "optionally substituted alkenyl group having a carbon number of not less than 2 and not more than 10" may be linear or branched and may be a vinyl group, a propenyl group, an isopropenyl group, a butenyl group, an isobutenyl group, a pentenyl group, a hexenyl group, a heptenyl group, an octenyl group, a decenyl group, or the like, for example.

Specific examples of substituents of the "optionally substituted alkenyl group having a carbon number of not less than 2 and not more than 10" are the same as for substituents that can be included in the previously described aromatic ring structure. The number of substituents may be one or may be more than one. In a case in which a plurality of substituents are included, these substituents may be the same as or different from one another.

The optionally substituted alkynyl group that can constitute R₁ to R₅ may be an optionally substituted alkynyl group having a carbon number of not less than 2 and not more than 10 without any specific limitations. The alkynyl group having a carbon number of not less than 2 and not more than 10 in the "optionally substituted alkynyl group having a carbon number of not less than 2 and not more than 10" may be linear or branched and may be an ethynyl group, a propynyl group, a 2-propynyl group (propargyl group), a butynyl group, a 2-butynyl group, a 3-butynyl group, a pentynyl group, a 2-pentynyl group, a hexynyl group, a 5-hexynyl group, a heptynyl group, an octynyl group, a 2-octynyl group, a nonanyl group, a decanyl group, a 7-decanyl group, or the like, for example.

Specific examples of substituents of the "optionally substituted alkynyl group having a carbon number of not less than 2 and not more than 10" are the same as for substituents that can be included in the previously described aromatic ring structure. The number of substituents may be one or may be more than one. In a case in which a plurality of substituents are included, these substituents may be the same as or different from one another.

The optionally substituted alkoxy group that can constitute R₁ to R₅ may be an optionally substituted alkoxy group having a carbon number of not less than 1 and not more than 10 without any specific limitations. The alkoxy group having a carbon number of not less than 1 and not more than 10 in the "optionally substituted alkoxy group having a carbon number of not less than 1 and not more than 10" may be linear or branched and may be a methoxy group, an ethoxy group, a propoxy group, an isopropoxy group, a butoxy group, an octoxy group, or the like, for example.

Specific examples of substituents of the "optionally substituted alkoxy group having a carbon number of not less than 1 and not more than 10" are the same as for substituents that can be included in the previously described aromatic ring structure. The number of substituents may be one or may be more than one. In a case in which a plurality of substituents are included, these substituents may be the same as or different from one another.

The optionally substituted aromatic hydrocarbon ring group that can constitute R₁ to R₅ may be an optionally substituted aromatic hydrocarbon ring group having a carbon number of not less than 6 and not more than 30 without any specific limitations. The aromatic hydrocarbon ring group having a carbon number of not less than 6 and not more than 30 in the "optionally substituted aromatic hydrocarbon ring group having a carbon number of not less than 6 and not more than 30" may be a phenyl group, a naphthyl group, an anthracenyl group, or the like.

Specific examples of substituents of the "optionally substituted aromatic hydrocarbon ring group having a carbon number of not less than 6 and not more than 30" are the same as for substituents that can be included in the previously described aromatic ring structure. The number of substituents may be one or may be more than one. In a case in which a plurality of substituents are included, these substituents may be the same as or different from one another.

The optionally substituted aromatic heteroring group that can constitute R₁ to R₅ may be an optionally substituted aromatic heteroring group having a carbon number of not less than 6 and not more than 30 without any specific limitations. The aromatic heteroring group having a carbon number of not less than 6 and not more than 30 in the "optionally substituted aromatic heteroring group having a carbon number of not less than 6 and not more than 30" may be a furanyl group, a 1-benzofuranyl group, a 2-benzofuranyl group, a pyrrolyl group, an indolyl group, a thienyl group, a benzo[c]thienyl group, a benzo[b]thienyl group, a pyridyl group, a pyrazinyl group, a pyrimidinyl group, a triazolyl group, a triazinyl group, a pyrrolyl group, an imidazolyl group, a pyrazolyl group, a thiazolyl group, a benzothiazolyl group, an oxazolyl group, a benzoxazolyl group, or the like, for example.

Specific examples of substituents of the "optionally substituted aromatic heteroring group having a carbon number of not less than 6 and not more than 30" are the same as for substituents that can be included in the previously described aromatic ring structure. The number of substituents may be one or may be more than one. In a case in which a plurality of substituents are included, these substituents may be the same as or different from one another.

The ring formed through bonding of two or more of R₁ to R₅ may be a monocycle or a polycycle. The ring formed through bonding of two or more of R₁ to R₅ may be an aromatic hydrocarbon ring, an aromatic heteroring, a non-aromatic hydrocarbon ring, or a polycyclic condensed ring resulting from condensation of two or more of these rings without any specific limitations.

Specific examples of the aromatic hydrocarbon ring and the aromatic heteroring are the same as for the previously described "aromatic ring structure". Moreover, specific examples of the non-aromatic hydrocarbon ring include cycloalkyl rings having a carbon number of not less than 3 and not more than 12 such as a cyclopropyl ring, a cyclobutyl ring, a cyclopentyl ring, a cyclohexyl ring, and a cyclooctyl ring.

In particular, the compound represented by formula (1) is preferably a compound in which at least one of R₁ to R₅ in formula (1) is an optionally substituted alkyl group having a carbon number of not less than 1 and not more than 10 and the rest of R₁ to R₅ are hydrogen atoms from a viewpoint of imparting a moderately sized Abbe number to an obtained hydrogenated cycloolefin ring-opened polymer while also even further reducing birefringence, and is more preferably a compound in which two of R₁ to R₅ are optionally substituted alkyl groups having a carbon number of not less than 1 and not more than 10 and the rest of R₁ to R₅ are hydrogen atoms.

Moreover, from a viewpoint of imparting a moderately sized Abbe number to an obtained hydrogenated cycloolefin ring-opened polymer and yet further reducing birefringence, the compound represented by formula (1) is preferably a compound in which at least one of R₁ to R₅ in formula (1) is a methyl group and the rest of R₁ to R₅ are hydrogen atoms, more preferably a compound in which two of R₁ to R₅ are methyl groups and the rest of R₁ to R₅ are hydrogen atoms, even more preferably a compound in which R₁ or R₅ in formula (1) is a methyl group and the rest of R₁ to R₅ are hydrogen atoms (i.e., N-2-methylphenyl-bicyclo[2.2.1]hept-5-ene-2,3-dicarboximide), and further preferably a compound in which R₁ and R₅ in formula (1) are methyl groups and the rest of R₁ to R₅ are hydrogen atoms (i.e., N-2,6-dimethylphenyl-bicyclo[2.2.1]hept-5-ene-2,3-dicarboximide).

Of these norbornene compounds having an aromatic ring structure, 1,4-methano-1,4,4a,9a-tetrahydrofluorene, 5,5A,6,9,9A,10,10A,11-octahydro-4bh-5,10,6,9-dimethano-benzo[B]fluorene, and a compound represented by formula (1) are preferable as the norbornene compound having an aromatic ring structure from a viewpoint of imparting a moderately sized Abbe number to an obtained hydrogenated cycloolefin ring-opened polymer while also even further reducing birefringence, and a compound represented by formula (1) is more preferable.

One of the norbornene compounds having an aromatic ring structure described above may be used individually, or two or more of the norbornene compounds having an aromatic ring structure described above may be used in combination.

### [Non-norbornene compound having aromatic ring structure]

The non-norbornene compound having an aromatic ring structure may be a cycloalkene having an aromatic ring structure such as described above, for example, without any specific limitations. Specific examples of the cycloalkene in the "cycloalkene having an aromatic ring structure" include cyclobutene, cyclopentene, cyclohexene, cycloheptene, cyclooctene, 1,4-cyclooctadiene, and cyclodecene.

Specific examples of the non-norbornene compound having an aromatic ring structure include 1-phenylcyclopentene, 1-phenylcyclohexene, and 5-phenylcyclooctene.

One of the non-norbornene compounds having an aromatic ring structure described above may be used individually, or two or more of the non-norbornene compounds having an aromatic ring structure described above may be used in combination.

### [Proportional content]

The proportional content of the structural unit (B) when the proportional content of all repeating units included in the cycloolefin ring-opened polymer is taken to be 100 mass% is preferably 10 mass% or more, more preferably 25 mass% or more, even more preferably 40 mass% or more, and particularly preferably 50 mass% or more, and is preferably 90 mass% or less, more preferably 85 mass% or less, and even more preferably 80 mass% or less. When the proportional content of the structural unit (B) is not less than any of the lower limits set forth above, lowering of the glass-transition temperature of a hydrogenated cycloolefin ring-opened polymer and thermal deformation of a shaped product can be inhibited. Moreover, when the proportional content of the structural unit (B) is not more than any of the upper limits set forth above, sedimentation of the cycloolefin ring-opened polymer after synthesis of the cycloolefin ring-opened polymer can be inhibited.

### <Other structural units>

No specific limitations are placed on other structural units that can optionally be included in the cycloolefin ring-opened polymer so long as they are structural units other than the structural unit (A) and the structural unit (B) described above, and one example thereof is a structural unit derived from a cycloolefin compound not having an aromatic ring structure.

Examples of cycloolefin compounds not having an aromatic ring structure that can form the structural unit derived from a cycloolefin compound not having an aromatic ring structure include norbornene compounds not having an aromatic ring structure and non-norbornene compounds not having an aromatic ring structure without any specific limitations.

Examples of norbornene compounds not having an aromatic ring structure include, but are not specifically limited to, tetracyclo[6.2.1.1^{3,6}.0^{2,7}]dodec-4-ene (commonly referred to as tetracyclododecene), 2-ethylidene-1,2,3,4,4a,5,8,8a-octahydro-1,4:5,8-dimethanonaphthalene (commonly referred to as ethylidene tetracyclododecene), tricyclo[5.2.1.0^{2,6}]deca-3,8-diene (commonly referred to as dicyclopentadiene), 5-ethylidenebicyclo[2.2.1]hept-2-ene (commonly referred to as ethylidene norbornene), bicyclo[2.2.1]hept-2-ene (also referred to as norbornene), 5-ethyl-bicyclo[2.2.1]hept-2-ene, 5-butyl-bicyclo[2.2.1]hept-2-ene, 5-methylidene-bicyclo[2.2.1]hept-2-ene, 5-vinyl-bicyclo[2.2.1]hept-2-ene, tetracyclo[10.2.1.0^{2,11}.0^{4,9}]pentadeca-4,6,8,13-tetraene, 9-methyl-tetracyclo[6.2.1.1^{3,6}.0^{2,7}]dodec-4-ene, 9-ethyl-tetracyclo[6.2.1.1^{3,6}.0^{2,7}]dodec-4-ene, 9-methylidene-tetracyclo[6.2.1.1^{3,6}.0^{2,7}]dodec-4-ene, 9-ethylidene-tetracyclo[6.2.1.1^{3,6}.0^{2,7}]dodec-4-ene, 9-vinyl-tetracyclo[6.2.1.1^{3,6}.0^{2,7}]dodec-4-ene, 9-propenyl-tetracyclo[6.2.1.1^{3,6}.0^{2,7}]dodec-4-ene, pentacyclo[9.2.1.1^{3,9}.0^{2,10}.0^{4,8}]pentadeca-5,12-diene, tetracyclo[9.2.1.0^{2,10}.0^{3,8}]tetradeca-3,5,7,12-tetraene, pentacyclo[9.2.1.1^{3,9}.0^{2,10}.0^{4,8}]pentadec-12-ene, and derivatives of the preceding examples. Note that the term "derivative" refers to a compound having a substituent in the ring structure. No specific limitations are placed on substituents that can be included in the ring structure so long as they do not have an aromatic ring structure, and examples thereof include an alkyl group, an alkylene group, a vinyl group, an alkoxycarbonyl group, and an alkylidene group. Moreover, the ring structure of a derivative may include one of these types of substituents or may include two or more of these types of substituents.

Examples of non-norbornene compounds not having an aromatic ring structure include cycloalkenes such as cyclobutene, cyclopentene, cyclohexene, cycloheptene, cyclooctene, 1,4-cyclooctadiene, and cyclodecene without any specific limitations.

One of the cycloolefin compounds not having an aromatic ring structure described above may be used individually, or two or more of the cycloolefin compounds not having an aromatic ring structure described above may be used in combination.

### [Proportional content]

The proportion constituted by other structural units (proportional content of other structural units) among all structural units (100 mass%) included in the cycloolefin ring-opened polymer is normally not less than 0 mass% and not more than 60 mass%.

### <Mass ratio of structural unit (A) and structural unit (B)>

From a viewpoint of imparting a moderately sized Abbe number to an obtained hydrogenated cycloolefin ring-opened polymer while also even further reducing birefringence, a mass ratio of the structural unit (A) and the structural unit (B) (structural unit (A)/structural unit (B)) in the cycloolefin ring-opened polymer is preferably 10/90 or more, and more preferably 25/75 or more, and is preferably 90/10 or less, and more preferably 75/25 or less.

### <Production method of cycloolefin ring-opened polymer>

The cycloolefin ring-opened polymer can be obtained through ring-opening polymerization of a monomer composition (mixture) that contains the various monomers described above in the "Cycloolefin ring-opened polymer" section. Specifically, the cycloolefin ring-opened polymer can be produced by, for example, using a commonly known ring-opening polymerization method such as ring-opening polymerization using a metathesis polymerization catalyst to perform ring-opening polymerization of the aforementioned monomer composition.

Note that ring-opening polymerization results in the number of rings included in each of the above-described monomers being reduced by at least one.

The metathesis polymerization catalyst may be any commonly known example thereof without any specific limitations. Specific examples include a catalyst system composed of a reductant and an acetyl acetone compound, a nitrate, or a halide of a metal selected from ruthenium, rhodium, palladium, osmium, iridium, platinum, and the like; a catalyst system composed of a promoter organoaluminum compound and an acetyl acetone compound or a halide of a metal selected from titanium, vanadium, zirconium, tungsten, and molybdenum; and a commonly known Schrock-type or Grubbs-type living ring-opening metathesis catalyst disclosed in JP-H7-179575A, J. Am. Chem. Soc., 1986, 108, 733, J. Am. Chem. Soc., 1993, 115, 9858, J. Am. Chem. Soc., 1996, 118, 100, etc. One of these catalysts may be used individually, or two or more of these catalysts may be used in combination. The amount of the catalyst that is used should be selected as appropriate depending on the polymerization conditions, etc.

A polar compound can be further added to a catalyst system such as described above in order to increase polymerization activity or ring-opening polymerization selectivity. Examples of polar compounds that may be used include molecular oxygen, alcohols, ethers, peroxides, carboxylic acids, acid anhydrides, acid chlorides, esters, ketones, nitrogen-containing compounds, sulfur-containing compounds, halogen-containing compounds, molecular iodine, and other Lewis acids. Aliphatic and aromatic tertiary amines are preferable as nitrogen-containing compounds, and specific examples thereof include triethylamine, dimethylaniline, tri-n-butylamine, pyridine, and α-picoline. One of these polar compounds may be used individually, or two or more of these polar compounds may be used in combination. Although the amount of the polar compound that is used may be selected as appropriate, a ratio with metal in the catalyst (i.e., a ratio of polar compound/metal (molar ratio)) is normally within a range of 1 to 100,000, and preferably within a range of 5 to 10,000.

The polymerization reaction may be performed by bulk polymerization without using a solvent or may be performed in a solvent such as an organic solvent. No specific limitations are placed on the solvent so long as it is inert in the polymerization reaction and examples thereof include aromatic hydrocarbons such as benzene, toluene, and xylene; aliphatic hydrocarbons such as n-pentane, hexane, and heptane; alicyclic hydrocarbons such as cyclohexane; halogenated hydrocarbons such as styrene dichloride, dichloroethane, dichloroethylene, tetrachloroethane, chlorobenzene, dichlorobenzene, and trichlorobenzene; nitrogen-containing hydrocarbons such as nitromethane, nitrobenzene, acetonitrile, and benzonitrile; and ether solvents such as tetrahydrofuran and ethylene glycol dimethyl ether.

Polymerization conditions such as the polymerization temperature, the polymerization pressure, and the polymerization time can be adjusted as appropriate.

### (Hydrogenated cycloolefin ring-opened polymer)

The presently disclosed hydrogenated cycloolefin ring-opened polymer is obtained through hydrogenation of the presently disclosed cycloolefin ring-opened polymer set forth above as a raw material. Moreover, the presently disclosed hydrogenated cycloolefin ring-opened polymer has both a moderately sized Abbe number and low birefringence.

Hydrogenation of the cycloolefin ring-opened polymer can be performed using hydrogen and a hydrogenation catalyst. The hydrogenation of the cycloolefin ring-opened polymer can be performed using any hydrogenation catalyst and hydrogenation conditions so long as it is possible to hydrogenate non-aromatic carbon-carbon unsaturated bonds such as olefinic double bonds that are present in the cycloolefin ring-opened polymer.

The hydrogenation of the cycloolefin ring-opened polymer is normally performed such that the percentage hydrogenation of non-aromatic carbon-carbon unsaturated bonds such as olefinic double bonds that are present in the cycloolefin ring-opened polymer (i.e., the proportion constituted by bonds that have undergone hydrogenation among non-aromatic carbon-carbon unsaturated bonds in the cycloolefin ring-opened polymer) is 90% or more, is preferably performed such that this percentage hydrogenation is 95% or more, and is more preferably performed such that this percentage hydrogenation is 99% or more. When the percentage hydrogenation of non-aromatic carbon-carbon unsaturated bonds such as olefinic double bonds that were included in the cycloolefin ring-opened polymer is not less than any of the lower limits set forth above, yellowing due to resin oxidative degradation during shaping or the like can be inhibited.

Although carbon-carbon unsaturated bonds (aromatic carbon-carbon unsaturated bonds) included in aromatic ring structures (aromatic rings and/or aromatic heterorings) that are present in the hydrogenated cycloolefin ring-opened polymer may be hydrogenated, it is preferable that such aromatic carbon-carbon unsaturated bonds are not hydrogenated from a viewpoint of setting the Abbe number to a moderate size while also even further reducing birefringence. Specifically, the percentage hydrogenation of aromatic carbon-carbon unsaturated bonds in the hydrogenated cycloolefin ring-opened polymer (i.e., the proportion constituted by bonds that have undergone hydrogenation among aromatic carbon-carbon unsaturated bonds in the cycloolefin ring-opened polymer) is preferably 20% or less, more preferably 10% or less, and particularly preferably 0% (i.e., it is particularly preferable that aromatic carbon-carbon unsaturated bonds are not hydrogenated).

Note that the percentage hydrogenation of non-aromatic carbon-carbon unsaturated bonds and aromatic carbon-carbon unsaturated bonds referred to in the present disclosure can be measured by a method described in the EXAMPLES section.

Also note that the percentage hydrogenation of non-aromatic carbon-carbon unsaturated bonds and aromatic carbon-carbon unsaturated bonds can be adjusted by altering the type or amount of hydrogenation catalyst and/or conditions of the hydrogenation reaction (reaction temperature, etc.), for example.

Examples of hydrogenation catalysts that can be used include a hydrogenation catalyst composed of an organometallic compound of groups 1 to 3 of the periodic table and a dicyclopentadienyltitanium halide, nickel carboxylate, cobalt carboxylate, or the like; a metal catalyst having a nickel, platinum, palladium, ruthenium, rhenium, or rhodium metal catalyst, a cobalt, nickel, rhodium, or ruthenium complex, or the like mounted on carbon, silica, diatomaceous earth, or the like; and a hydrogenated compound such as lithium aluminum hydride or p-toluenesulfonyl hydrazide. Of these examples, a ruthenium compound is preferable as the hydrogenation catalyst from a viewpoint of obtaining the target product with good yield and without isomerization.

The ruthenium compound may be RuHCl(CO)(PPh₃)₃, RuHCl(CO)[P(p-Me-Ph)₃]₃, RuHCl(CO)(PCy₃)₂, RuHCl(CO)[P(n-Bu)₃]₃, RuHCl(CO)[P(i-Pr)₃]₂, RuH₂(CO)(PPh₃)₃, RuH₂(CO)[P(p-Me-Ph)₃]₃, RuH₂(CO)(PCy₃)₃, RuH₂(CO)[P(n-Bu)₃]₃, RuH(OCOCH₃)(CO)(PPh₃)₂, RuH(OCOPh)(CO)(PPh₃)₂, RuH(OCOPh-CH₃)(CO)(PPh₃)₂, RuH(OCOPh-OCH₃)(CO)(PPh₃)₂, RuH(OCOPh)(CO)(PCy₃)₂, or the like, for example.

The hydrogenation reaction of the cycloolefin ring-opened polymer can normally be carried out in an inert organic solvent. The inert organic solvent may be an aromatic hydrocarbon solvent such as benzene, toluene, or xylene; an aliphatic hydrocarbon solvent such as pentane or hexane; an alicyclic hydrocarbon solvent such as cyclohexane or decahydronaphthalene; an ether solvent such as tetrahydrofuran or ethylene glycol dimethyl ether; or the like.

The reaction temperature when hydrogen is added into a system where the cycloolefin ring-opened polymer and the hydrogenation catalyst are present to perform hydrogenation of the cycloolefin ring-opened polymer is normally -20°C to 250°C, preferably -10°C to 220°C, and more preferably 0°C to 200°C, though this temperature differs depending on the hydrogenation catalyst that is used. A reaction temperature that is too low may result in the rate of hydrogenation being too slow, whereas a reaction temperature that is too high may cause side reactions.

Moreover, the pressure of hydrogen is normally 0.01 MPa to 20 MPa, preferably 0.05 MPa to 15 MPa, and more preferably 0.1 MPa to 10 MPa. A hydrogen pressure that is too low may result in the rate of hydrogenation being too slow, whereas a hydrogen pressure that is too high imposes equipment constraints in terms of necessitating a reactor having high pressure resistance.

The reaction time is normally 0.1 hours to 10 hours but is dependent on the scale of the reaction.

After the hydrogenation reaction, the resulting hydrogenated cycloolefin ring-opened polymer may be collected according to a standard method. In collection of the hydrogenated product, catalyst residue can be removed by a technique such as filtration.

### <Structural units>

The structural unit (A) in the hydrogenated cycloolefin ring-opened polymer can include a structural unit that is obtained in ring-opening polymerization of deltacyclene and a structural unit that is obtained through hydrogenation of such a structural unit. Likewise, the structural unit (B) in the hydrogenated cycloolefin ring-opened polymer can include a structural unit that is obtained in ring-opening polymerization of a cycloolefin monomer having an aromatic ring structure and a structural unit that is obtained through hydrogenation of such a structural unit. Furthermore, in the same manner, other structural units that are optionally included in the hydrogenated cycloolefin ring-opened polymer can include a structural unit that is obtained in ring-opening polymerization of a cycloolefin compound that can form another structural unit and a structural unit that is obtained through hydrogenation of such a structural unit.

Note that the "structural unit obtained in ring-opening polymerization of deltacyclene", "structural unit obtained in ring-opening polymerization of a cycloolefin monomer having an aromatic ring structure", and "structural unit obtained in ring-opening polymerization of a cycloolefin compound that can form another structural unit" are each a non-hydrogenated structural unit (repeating unit) that has not been hydrogenated in hydrogenation of the cycloolefin ring-opened polymer.

The proportional content of the structural unit (A) in the hydrogenated cycloolefin ring-opened polymer (total proportion of structural unit obtained in ring-opening polymerization of deltacyclene and structural unit obtained through hydrogenation of such a structural unit) is the same as for the preferred proportional content of the structural unit (A) in the cycloolefin ring-opened polymer that was previously described in the "Cycloolefin ring-opened polymer" section. Moreover, the proportional content of the structural unit (B) in the hydrogenated cycloolefin ring-opened polymer (total proportion of structural unit obtained in ring-opening polymerization of a cycloolefin monomer having an aromatic ring structure and structural unit obtained through hydrogenation of such a structural unit) is the same as for the preferred proportional content of the structural unit (B) in the cycloolefin ring-opened polymer that was previously described in the "Cycloolefin ring-opened polymer" section. Furthermore, the proportional content of other structural units that are optionally included in the hydrogenated cycloolefin ring-opened polymer (total proportion of structural unit obtained in ring-opening polymerization of a cycloolefin compound that can form another structural unit and structural unit obtained through hydrogenation of such a structural unit) is the same as for the preferred proportional content of other structural units in the cycloolefin ring-opened polymer that was previously described in the "Cycloolefin ring-opened polymer" section.

Also, the preferred mass ratio of the structural unit (A) and the structural unit (B) in the hydrogenated cycloolefin ring-opened polymer is the same as for the preferred proportional contents that were previously described in the "Cycloolefin ring-opened polymer" section.

### <Weight-average molecular weight>

The weight-average molecular weight of the presently disclosed hydrogenated cycloolefin ring-opened polymer is preferably 10,000 or more, more preferably 15,000 or more, even more preferably 20,000 or more, and particularly preferably 40,000 or more, and is preferably 160,000 or less, more preferably 80,000 or less, and even more preferably 70,000 or less. When the weight-average molecular weight of the hydrogenated cycloolefin ring-opened polymer is not less than any of the lower limits set forth above, reduction of strength of a resin shaped product that is obtained using the hydrogenated cycloolefin ring-opened polymer can be inhibited. Moreover, when the weight-average molecular weight of the hydrogenated cycloolefin ring-opened polymer is not more than any of the upper limits set forth above, the occurrence of shaping faults caused by poor fluidity during shaping of the hydrogenated cycloolefin ring-opened polymer can be inhibited.

Note that the "weight-average molecular weight" referred to in the present disclosure can be measured by a method described in the EXAMPLES section.

Also note that the weight-average molecular weight of the hydrogenated cycloolefin ring-opened polymer can be adjusted by altering the types and/or amounts of monomers and the type and/or amount of a molecular weight modifier (chain transfer agent) used in production of the cycloolefin ring-opened polymer, for example.

### <Glass-transition temperature>

The glass-transition temperature of the presently disclosed hydrogenated cycloolefin ring-opened polymer is preferably 120°C or higher, more preferably 125°C or higher, and even more preferably 130°C or higher, and is preferably 200°C or lower, more preferably 190°C or lower, and even more preferably 180°C or lower. When the glass-transition temperature of the hydrogenated cycloolefin ring-opened polymer is not lower than any of the lower limits set forth above, deterioration of heat resistance and deterioration of optical properties due to thermal deformation or the like can be inhibited. Moreover, when the glass-transition temperature of the hydrogenated cycloolefin ring-opened polymer is not higher than any of the upper limits set forth above, the occurrence of oxidative degradation of the hydrogenated cycloolefin ring-opened polymer caused by an excessively high processing temperature in shaping of the hydrogenated cycloolefin ring-opened polymer can be inhibited.

The glass-transition temperature of the hydrogenated cycloolefin ring-opened polymer can be adjusted by altering the types and/or amounts of monomers used in production of the cycloolefin ring-opened polymer, for example.

### <Abbe number>

The Abbe number (vd) of the presently disclosed hydrogenated cycloolefin ring-opened polymer is preferably less than 50, more preferably 46 or less, even more preferably 45 or less, further preferably 43 or less, and particularly preferably 42 or less. When the Abbe number of the hydrogenated cycloolefin ring-opened polymer is less than any of the upper limits set forth above, the hydrogenated cycloolefin ring-opened polymer can suitably be used in applications other than high-Abbe number optical element applications. Note that the lower limit for the Abbe number is not specifically limited but is normally around 20.

### <Birefringence>

The birefringence of the presently disclosed hydrogenated cycloolefin ring-opened polymer is preferably 300 or less, more preferably 200 or less, even more preferably 100 or less, further preferably 90 or less, and particularly preferably 85 or less. When the birefringence of the hydrogenated cycloolefin ring-opened polymer is not more than any of the upper limits set forth above, optical properties of an obtained resin shaped product as an optical element can be improved.

Note that the "birefringence" referred to in the present disclosure can be measured by a method described in the EXAMPLES section.

### <Refractive index>

The refractive index of the presently disclosed hydrogenated cycloolefin ring-opened polymer is preferably 1.5 or more, more preferably 1.52 or more, and even more preferably 1.54 or more. When the refractive index of the hydrogenated cycloolefin ring-opened polymer is not less than any of the lower limits set forth above, this enables greater freedom of design of an obtained resin shaped product as an optical element.

Note that the "refractive index" referred to in the present disclosure can be measured by a method described in the EXAMPLES section.

### (Resin composition)

The presently disclosed resin composition contains the presently disclosed hydrogenated cycloolefin ring-opened polymer set forth above and optionally further contains polymer materials other than the presently disclosed hydrogenated cycloolefin ring-opened polymer and/or various additives.

Examples of polymer materials and additives that can be contained in the resin composition include polymer materials and additives that are described in JP-H10-139865A, for example, but are not specifically limited thereto.

In particular, it is preferable for the resin composition to contain an antioxidant such as a phenolic antioxidant, a phosphoric antioxidant, or a sulfuric antioxidant.

Polymer materials and additives can be mixed with the hydrogenated cycloolefin ring-opened polymer by any method without any specific limitations so long as they can be sufficiently dispersed in the hydrogenated cycloolefin ring-opened polymer. Specifically, polymer materials and additives may be added at any stage in production of the hydrogenated cycloolefin ring-opened polymer, may be kneaded with the hydrogenated cycloolefin ring-opened polymer using a kneader, or may be mixed with the hydrogenated cycloolefin ring-opened polymer inside of a shaping device.

Although no specific limitations are placed on the amount of polymer materials and additives so long as the effects according to the present disclosure are not lost, the amount can be set as not less than 0.01 parts by mass and not more than 2.0 parts by mass relative to 100 parts by mass of the hydrogenated cycloolefin ring-opened polymer, for example.

Moreover, although no specific limitations are placed on the amount of an antioxidant so long as the effects according to the present disclosure are not lost, the amount can be set as not less than 0.01 parts by mass and not more than 2.0 parts by mass relative to 100 parts by mass of the hydrogenated cycloolefin ring-opened polymer, for example.

### (Resin shaped product)

The presently disclosed resin shaped product is a product obtained through shaping of the presently disclosed resin composition set forth above into any shape. Moreover, the presently disclosed resin shaped product can display excellent performance as a result of containing the presently disclosed hydrogenated cycloolefin ring-opened polymer set forth above.

No specific limitations are placed on the shaping method so long as the resin composition can be shaped and examples thereof include injection molding, extrusion blow molding, injection blow molding, two-stage blow molding, multilayer blow molding, connection blow molding, stretch blow molding, rotational molding, vacuum forming, extrusion molding, calendering, solution casting, hot press forming, and inflation. Of these shaping methods, extrusion molding is preferable.

The presently disclosed resin shaped product is preferably an optical element, and is more preferably a lens.

The lens can be obtained by uniformly heating and melting the presently disclosed resin composition to obtain a preform, subsequently causing the preform to flow into a mold, and then cooling the preform, for example, but is not specifically limited to being obtained in this manner.

### EXAMPLES

The following provides a more specific description of the present disclosure based on examples. However, the present disclosure is not limited to the following examples. In the following description, "%" and "parts" used in expressing quantities are by mass, unless otherwise specified. Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

### <Polymerization conversion rate>

The residual amount of monomer in a reaction solution after a polymerization reaction had ended was measured by gas chromatography, and the polymerization conversion rate was calculated based on that value.

### <Percentage hydrogenation>

The percentage hydrogenation of non-aromatic carbon-carbon unsaturated bonds and the percentage hydrogenation of aromatic carbon-carbon unsaturated bonds in a hydrogenated cycloolefin ring-opened polymer were determined by measuring the number of moles of carbon-carbon double bonds that had been hydrogenated using a ¹H-NMR spectrum and then calculating a proportion thereof relative to the number of moles of carbon-carbon double bonds prior to hydrogenation.

### <Weight-average molecular weight>

The weight-average molecular weight (Mw) of a cycloolefin ring-opened polymer was calculated as a polystyrene-equivalent value by gel permeation chromatography (HLC-8020 produced by Tosoh Corporation; using combination of three types of columns: TSKgel SuperH2000, TSKgel SuperH4000, and TSKgel SuperH5000). Note that tetrahydrofuran (THF) was used as an eluent solvent.

### <Glass-transition temperature>

The glass-transition temperature (Tg) of a hydrogenated cycloolefin ring-opened polymer was measured based on JIS K7121 using a differential scanning calorimeter (DSC6220 produced by SII NanoTechnology Inc.) with a condition of a heating rate of 10°C/min.

### <Birefringence>

A birefringence meter (produced by Photonic Lattice, Inc.; product name: WPA-200(-L)) was used to perform line measurement of a retardation value in a direction perpendicular to the direction of resin flow at a location 10 mm from a gate of an obtained resin shaped product using light having a wavelength of 543 nm. A largest value among the measured values was taken to be the birefringence.

### <Refractive index>

An obtained resin shaped product was left in an atmosphere having a temperature 15°C lower than the glass-transition temperature of a hydrogenated cycloolefin ring-opened polymer (= Tg - 15°C) for 20 hours to obtain a measurement sample.

The refractive index (n_{d}, n_{C}, n_{F}) of the obtained measurement sample at 25°C was measured using a precision refractometer (produced by Shimadzu Corporation; product name: KPR-3000; light source: He lamp (587.6 nm), H₂ lamp (656.3 nm, 486.1 nm)). Note that Table 1 shows the refractive index (n_{d}) of light having a wavelength of 587.6 nm.

### <Abbe number>

Refractive indices (n_{d}, n_{C}, n_{F}) at 25°C determined in measurement of refractive index described above were used to calculate the Abbe number (v_{d}) according to the following equation (1).
[Math. 1] $vd = \frac{nd - 1}{nF - nC}$

### (Example 1)

A glass pressure-resistant reactor that had been purged with nitrogen was charged with 40 parts of 1,2,3,3a,4,6a-hexahydro-1,2,4-methenopentalene (deltacyclene; hereinafter, also abbreviated as "DCL"), 60 parts of N-2-methylphenyl-bicyclo[2.2.1]hept-5-ene-2,3-dicarboximide (hereinafter, also abbreviated as "NBTI") as a cycloolefin monomer having an aromatic ring structure, 3 parts of 1-hexene as a chain transfer agent, 0.025 parts of 1,3-bis(2,4,6-trimethylphenyl)-4,5-dihydroimidazol-2-ylidene[2-(isopropoxy)-5-(N,N-dimethylaminosulfonyl)phenyl]methyleneruthenium(II) dichloride as a polymerization catalyst, and 1,000 parts of tetrahydrofuran as a solvent, and all contents thereof were stirred at 65°C for 3 hours to perform ring-opening polymerization. The polymerization conversion rate of the resultant ring-opened polymer was 98%, and the weight-average molecular weight of the resultant cycloolefin ring-opened polymer was 16,100.

Next, the resultant polymerization reaction liquid was loaded into an autoclave, and a hydrogenation reaction was performed under stirring at 150°C with a hydrogen pressure of 4.5 MPa for 6 hours. This solution was filtered using a funnel that had been precoated with Radiolite, and then 24 hours of vacuum drying was performed at 150°C to obtain a hydrogenated cycloolefin ring-opened polymer.

The percentage hydrogenation of non-aromatic carbon-carbon unsaturated bonds in the obtained hydrogenated cycloolefin ring-opened polymer was 90.0% or more. Moreover, the percentage hydrogenation of aromatic carbon-carbon unsaturated bonds in the obtained hydrogenated cycloolefin ring-opened polymer was 0%.

Next, 1 part of an antioxidant (tetrakis[methylene-3-(3',5'-di-t-butyl-4'-hydroxyphenyl)propionate]methane; Irganox^{®} 1010 (Irganox is a registered trademark in Japan, other countries, or both) produced by BASF Japan Ltd.) was mixed with 100 parts of the hydrogenated cycloolefin ring-opened polymer to obtain a resin composition containing the hydrogenated cycloolefin ring-opened polymer.

The obtained resin composition was subsequently loaded into a twin-screw extruder (TEM-37B produced by Toshiba Machine Co., Ltd.) having four die holes with an internal diameter of 3 mm. The twin-screw extruder was used to shape the resin composition into a strand shape by hot melt extrusion molding. This shaped product was finely cut up by a strand cutter to obtain resin pellets. Operating conditions of the twin-screw extruder were as follows.
- Barrel temperature setting: 270°C to 280°C
- Die temperature setting: 250°C

Dried pellets obtained in this manner were used to perform injection molding in an injection molding machine (produced by FANUC Corporation; product no.: α-100B) under conditions of a resin temperature of 20°C lower than the glass-transition temperature of the resin composition (= Tg - 20°C), a mold temperature of 130°C lower than the glass-transition temperature of the resin composition (= Tg - 130°C), and a cycle time of 1 minute to obtain a resin shaped product having a flat plate shape of 80 mm × 10 mm × 4 mm.

### (Example 2)

A cycloolefin ring-opened polymer, a hydrogenated cycloolefin ring-opened polymer, and a resin shaped product were produced in the same way as in Example 1 with the exception that in Example 1, the amount of DCL was changed from 40 parts to 20 parts, and 80 parts of N-2,6-dimethylphenyl-bicyclo[2.2.1]hept-5-ene-2,3-dicarboximide (hereinafter, also abbreviated as "NBXI") was used as a cycloolefin monomer having an aromatic ring structure instead of 60 parts of NBTI. Moreover, various measurements and evaluations were carried out. The results are shown in Table 1.

### (Example 3)

A cycloolefin ring-opened polymer, a hydrogenated cycloolefin ring-opened polymer, and a resin shaped product were produced in the same way as in Example 2 with the exception that in Example 2, the amount of DCL was changed from 20 parts to 50 parts, the amount of NBXI was changed from 80 parts to 50 parts, and the amount of 1-hexene as a chain transfer agent was changed from 3 parts to 2.5 parts. Moreover, various measurements and evaluations were carried out. The results are shown in Table 1.

### (Example 4)

A cycloolefin ring-opened polymer, a hydrogenated cycloolefin ring-opened polymer, and a resin shaped product were produced in the same way as in Example 3 with the exception that in Example 3, the amount of DCL was changed from 50 parts to 37 parts, and 63 parts of 5,5A,6,9,9A,10,10A,11-octahydro-4bh-5,10,6,9-dimethano-benzo[B]fluorene (hereinafter, also abbreviated as "HNT") was used as a cycloolefin monomer having an aromatic ring structure instead of 50 parts of NBXI. Moreover, various measurements and evaluations were carried out. The results are shown in Table 1.

### (Example 5)

A cycloolefin ring-opened polymer, a hydrogenated cycloolefin ring-opened polymer, and a resin shaped product were produced in the same way as in Example 3 with the exception that in Example 3, the amount of DCL was changed from 50 parts to 20 parts, 60 parts of NBTI was used as a cycloolefin monomer having an aromatic ring structure instead of 50 parts of NBXI, and 20 parts of 2-ethylidene-1,2,3,4,4a,5,8,8a-octahydro-1,4:5,8-dimethanonaphthalene, which is a cycloolefin monomer not having an aromatic ring structure, was also used. Moreover, various measurements and evaluations were carried out. The results are shown in Table 1.

### (Example 6)

A cycloolefin ring-opened polymer, a hydrogenated cycloolefin ring-opened polymer, and a resin shaped product were produced in the same way as in Example 2 with the exception that in Example 2, the amount of DCL was changed from 20 parts to 40 parts, the amount of NBXI was changed from 80 parts to 60 parts, and the amount of 1-hexene as a chain transfer agent was changed from 3 parts to 0.5 parts. Moreover, various measurements and evaluations were carried out. The results are shown in Table 1.

### (Example 7)

A cycloolefin ring-opened polymer, a hydrogenated cycloolefin ring-opened polymer, and a resin shaped product were produced in the same way as in Example 2 with the exception that in Example 2, the amount of DCL was changed from 20 parts to 40 parts, the amount of NBXI was changed from 80 parts to 60 parts, and the amount of 1-hexene as a chain transfer agent was changed from 3 parts to 0.25 parts. Moreover, various measurements and evaluations were carried out. The results are shown in Table 1.

### (Example 8)

A cycloolefin ring-opened polymer, a hydrogenated cycloolefin ring-opened polymer, and a resin shaped product were produced in the same way as in Example 2 with the exception that in Example 2, the amount of DCL was changed from 20 parts to 44 parts, the amount of NBXI was changed from 80 parts to 56 parts, and the amount of 1-hexene as a chain transfer agent was changed from 3 parts to 0.24 parts. Moreover, various measurements and evaluations were carried out. The results are shown in Table 1.

### (Example 9)

A cycloolefin ring-opened polymer, a hydrogenated cycloolefin ring-opened polymer, and a resin shaped product were produced in the same way as in Example 2 with the exception that in Example 2, the amount of DCL was changed from 20 parts to 44 parts, the amount of NBXI was changed from 80 parts to 56 parts, and the amount of 1-hexene as a chain transfer agent was changed from 3 parts to 0.18 parts. Moreover, various measurements and evaluations were carried out. The results are shown in Table 1.

### (Example 10)

A cycloolefin ring-opened polymer, a hydrogenated cycloolefin ring-opened polymer, and a resin shaped product were produced in the same way as in Example 2 with the exception that in Example 2, the amount of DCL was changed from 20 parts to 44 parts, the amount of NBXI was changed from 80 parts to 56 parts, and the amount of 1-hexene as a chain transfer agent was changed from 3 parts to 0.1 parts. Moreover, various measurements and evaluations were carried out. The results are shown in Table 1.

### (Comparative Example 1)

A cycloolefin ring-opened polymer was produced in the same way as in Example 3 with the exception that in Example 3, the amount of DCL was changed from 50 parts to 100 parts, and NBXI as a cycloolefin monomer having an aromatic ring structure was not compounded. Note that since a precipitate was contained in the polymerization reaction liquid containing the cycloolefin ring-opened polymer, it was not possible to measure the weight-average molecular weight or perform hydrogenation of the cycloolefin ring-opened polymer. Consequently, a hydrogenated cycloolefin ring-opened polymer and a resin shaped product could not be produced, and various measurements and evaluations could not be carried out.

### (Comparative Example 2)

A cycloolefin ring-opened polymer, a hydrogenated cycloolefin ring-opened polymer, and a resin shaped product were produced in the same way as in Example 3 with the exception that in Example 3, DCL was not compounded, and 100 parts of 1,4-methano-1,4,4a,9a-tetrahydrofluorene (hereinafter, also abbreviated as "MTF") was compounded as a cycloolefin monomer having an aromatic ring structure instead of 50 parts of NBXI. Moreover, various measurements and evaluations were carried out. The results are shown in Table 1.

### (Comparative Example 3)

A cycloolefin ring-opened polymer, a hydrogenated cycloolefin ring-opened polymer, and a resin shaped product were produced in the same way as in Example 3 with the exception that in Example 3, 50 parts of tetracyclo [6.2.1.1^{3,6}.0^{2,7}]dodec-4-ene (hereinafter, abbreviated as "TCD") was compounded as a cycloolefin monomer not having an aromatic ring structure instead of 50 parts of NBXI. Moreover, various measurements and evaluations were carried out. The results are shown in Table 1.

**[Table 1]**

| | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|---|
| Cycloolefin ring-opened polymer | DCL [mass%] | | 40 | 20 | 50 | 37 | 20 | 40 | 40 | 44 | 44 | 44 | 100 | - | 50 |
| | Norbornene compound having aromatic ring structure | NBTI [mass%] | 60 | - | - | - | 60 | - | - | - | - | - | - | - | - |
| | | NBXI [mass%] | - | 80 | 50 | - | - | 60 | 60 | 56 | 56 | 56 | - | - | - |
| | | HNT mass] | - | - | - | 63 | - | - | - | - | - | - | - | - | - |
| | | MTF [mass%] | - | - | - | - | - | - | - | - | - | - | - | 100 | - |
| | Norbornene compound not having aromatic ring structure | TCD [mass%] | - | - | - | - | - | - | - | - | - | - | - | - | 50 |
| | | ETD [mass%] | - | - | - | - | 20 | - | - | - | - | - | - | - | - |
| | Polymerization conversion rate [%] | | 98 | 97 | 98 | 97 | 99 | 98 | 98 | 98 | 98 | 98 | - | 99 | 99 |
| | Weight-average molecular weight [-] | | 16100 | 17500 | 21900 | 20400 | 22200 | 42144 | 69170 | 82445 | 102400 | 160400 | - | 28900 | 25600 |
| Hydrogenated cycloolefin ring-opened polymer | Percentage hydrogenation of non-aromatic carbon-carbon unsaturated bonds [%] | | ≥90.0 | ≥90.0 | ≥90.0 | ≥90.0 | ≥90.0 | ≥90.0 | ≥90.0 | ≥90.0 | ≥90.0 | ≥90.0 | - | ≥90.0 | ≥90.0 |
| Evaluation | Refractive index [-] | | 1.566 | 1.562 | 1.559 | 1.577 | 1.560 | 1.557 | 1.557 | 1.558 | 1.558 | 1.558 | - | 1.586 | 1.548 |
| | Abbe number [-] | | 41 | 39 | 43 | 41 | 45 | 43 | 42 | 42 | 42 | 42 | - | 37 | 55 |
| | Glass-transition temperature [°C] | | 160 | 186 | 120 | 123 | 154 | 160 | 160 | 148 | 150 | 149 | - | 136 | 109 |
| | Birefringence [-] | | 85 | 81 | 64 | 92 | 90 | 55 | 71 | 60 | 88 | 90 | - | 612 | 77 |

It can be seen from Table 1 that the hydrogenated cycloolefin ring-opened polymers of Examples 1 to 10, which include a structural unit (A) derived from deltacyclene and a structural unit (B) derived from a cycloolefin monomer having an aromatic ring structure, have both a moderately sized Abbe number and low birefringence.

In contrast, it can be seen from Table 1 that the hydrogenated cycloolefin ring-opened polymer of Comparative Example 2, which includes a structural unit (B) derived from a cycloolefin monomer having an aromatic ring structure but does not include a structural unit (A) derived from deltacyclene, has high birefringence. It can also be seen from Table 1 that the hydrogenated cycloolefin ring-opened polymer of Comparative Example 3, which includes a structural unit (A) derived from deltacyclene but does not include a structural unit (B) derived from a cycloolefin monomer having an aromatic ring structure, has an excessively large Abbe number.

### INDUSTRIAL APPLICABILITY

According to the present disclosure, it is possible to provide a hydrogenated cycloolefin ring-opened polymer having both a moderately sized Abbe number and low birefringence and a raw material thereof.

Moreover, according to the present disclosure, it is possible to provide a resin composition that can advantageously be used as a material of various shaped products such as optical elements and a resin shaped product formed using this resin composition.

## Claims

1. A cycloolefin ring-opened polymer comprising:
a structural unit (A) derived from deltacyclene; and
a structural unit (B) derived from a cycloolefin monomer having an aromatic ring structure.

2. The cycloolefin ring-opened polymer according to claim 1, wherein the structural unit (B) is a structural unit derived from a monomer represented by formula (1), shown below: 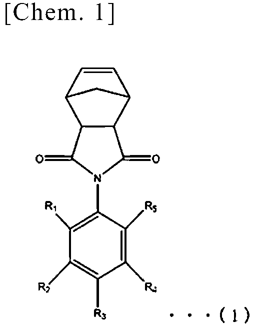 where, in formula (1), R₁ to R₅ each independently represent a hydrogen atom, a halogen atom, a hydroxy group, a cyano group, a nitro group, an optionally substituted alkyl group, an optionally substituted cycloalkyl group, an optionally substituted alkenyl group, an optionally substituted alkynyl group, an optionally substituted alkoxy group, an optionally substituted aromatic hydrocarbon ring group, or an optionally substituted aromatic heteroring group, and two or more of R₁ to R₅ may be bonded to form a ring.

3. A hydrogenated cycloolefin ring-opened polymer obtained through hydrogenation of the cycloolefin ring-opened polymer according to claim 1.

4. The hydrogenated cycloolefin ring-opened polymer according to claim 3, wherein aromatic carbon-carbon unsaturated bonds present in the hydrogenated cycloolefin ring-opened polymer are not hydrogenated.

5. The hydrogenated cycloolefin ring-opened polymer according to claim 3, having an Abbe number of less than 50.

6. The hydrogenated cycloolefin ring-opened polymer according to claim 3, having a glass-transition temperature of 120°C or higher.

7. A resin composition comprising the hydrogenated cycloolefin ring-opened polymer according to any one of claims 3 to 6.

8. A resin shaped product obtained through shaping of the resin composition according to claim 7.
